# EUROPEAN PATENT APPLICATION

(11) **EP 0 625 744 A1**
(43) Date of publication of application: **23.11.1994**
(21) Application number: 94106072.5
(22) Date of filing: 19.04.1994
(51) Int. Cl.: G06F 3/023

(54) **Remote control system**

(30) Priority: 21.04.1993 JP 118989/93
(71) Applicant: MURATA MANUFACTURING CO., LTD., Nagaokakyo-shi Kyoto-fu 226 (JP)
(72) Inventor: Nakamura, Takeshi, c/o Murata Manufacturing Co.,Lt, Nagaokakyo-shi, Kyoto-fu (JP)
(74) Representative: Schoppe, Fritz, Dipl.-Ing.

(57) **Abstract**

Selective items showing a plurality of functions are displayed on a display of a television. An angular velocity sensor is mounted on a transmitter to detect an angular velocity about its longitudinal axis. The resulting angular velocity is converted into a control signal, which is transmitted to a receiver from the transmitter. That is, by rotating the transmitter about its longitudinal axis, a cursor is moved and the desired selective item is selected. A selected function is executed by pressing on execution switch.

## Description

### BACKGROUND OF THE INVENTION

### Field of the Invention

The present invention relates to a remote control system, and particularly to a remote control system used for selecting selective items displayed on, for example, a display.

### Description of the Prior Art

In a television and the like adopting a remote control system, functions such as ON and OFF of a power switch, a selection of channels, a volume control and so on are controlled by a control signal sent from a transmitter. The control signal from the transmitter is sent mainly by pressing an operating button. However, when the functions added to the television and the like increase, the operating button of the transmitter also increases to deteriorate the operability.

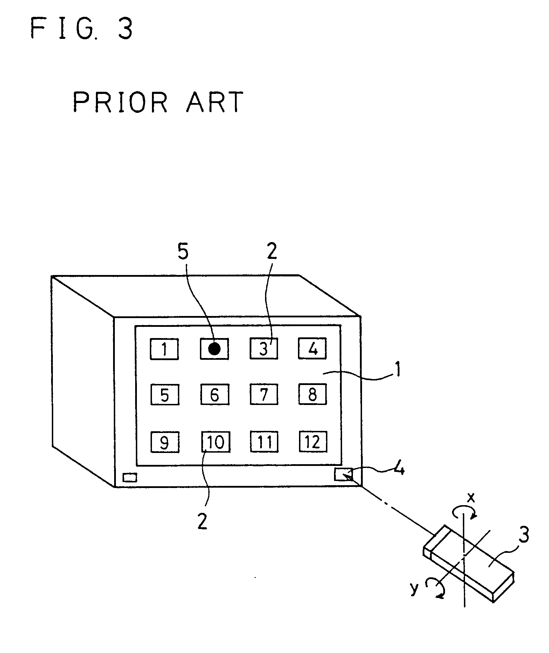

In order to solve such a defect, for example, as shown in Fig. 3, a system using a three-dimensional mouse for controlling is considered. In such system, for example, selective items 2 showing the functions are displayed on a display 1 in a matrix. For selecting the selective items 2, movements of the transmitter 3 is utilized. On the transmitter 3, two angular velocity sensors are mounted to detect a rotation x about a perpendicular axis and a rotation y about a horizontal axis. When the rotation x about the perpendicular axis is detected, the control signal corresponding to the rotation is sent to a receiver 4 from the transmitter 3, and the lateral selective items 2 are selected by a cursor 5. When the rotation y about the horizontal axis is detected, the control signal corresponding to the rotation is sent to the receiver 4 from the transmitter 3, and the vertical selective items 2 are selected by the cursor 5.

That is, when the transmitter 3 is moved laterally, the cursor 5 moves on the selective items 2 laterally, and when the transmitter 3 is moved vertically, the cursor 5 moves on the selective items 2 vertically. As such, by moving the transmitter laterally and vertically, any selective items 2 displayed on the display can be selected. When the selective item 2 is selected, by pressing an execution button, the selected function is executed.

In such remote control system, however, since the transmitter is moved laterally or vertically, if a volume of the movement is large, sometimes the control signal from the transmitter deviates from a receiving range of the receiver. Since the transmitter is operated by hand, there is the possibility that the selected selective item may change due to an unsteady operation. Furthermore, since it is necessary to detect the rotations about the two axes in this system, at least, two angular velocity sensors are required, results in a high cost.

### SUMMARY OF THE INVENTION

It is therefore a primary object of the present invention to provide a remote control system which has a good operability and can be used at low cost, without being affected by an unstable hand or deviation of a control signal from a receiving range.

The present invention is directed to a remote control system comprising, a transmitter for transmitting a control signal to control an object being controlled, and a receiver for receiving the control signal from the transmitter, wherein the transmitter is provided with an angular velocity sensor, and an angular velocity about one axis is detected by the angular velocity sensor, and a signal corresponding to the detected angular velocity is transmitted as the control signal.

The angular velocity about one axis is detected by the angular velocity sensor, and the signal corresponding to the angular velocity is sent to the receiver from the transmitter as the control signal.

According to the present invention, the angular velocity about one axis is detected. That is, the control signal can be sent by rotating the transmitter as turning a door knob without moving it laterally or vertically. The transmitter is not necessary to be moved in a large way, and hence the control signal hardly deviates from the receiving range of the receiver. A hand is usually unstable laterally or vertically, but is stable in the rotating direction. Therefore, if a cursor is once adjusted to a selective item displayed on a display and the like, there is a little possibility that the selective item changes due to the unstable hand.

By displaying the selective items on the display and the like, a number of operating buttons are not necessary to be formed on the transmitter, thus a good operability is accomplished. Since the angular velocity about one axis is to be detected, one angular velocity sensor is sufficient, thus the remote control system can be used at low cost.

The above and other objects, features, aspects and advantages of the present invention will become more apparent from the following detailed description of the embodiments made with reference to the drawings.

### BRIEF DESCRIPTION OF THE DRAWINGS

Fig. 1 is an illustrative view showing a television using a remote control system of the present invention.

Fig. 2 is an illustrative view showing a modified example of selective items displayed on a television shown in Fig. 1.

Fig. 3 is an illustrative view showing a television using a conventional remote control system using a 3-dimensional mouse as a background of the present invention.

### DESCRIPTION OF THE PREFERRED EMBODIMENTS

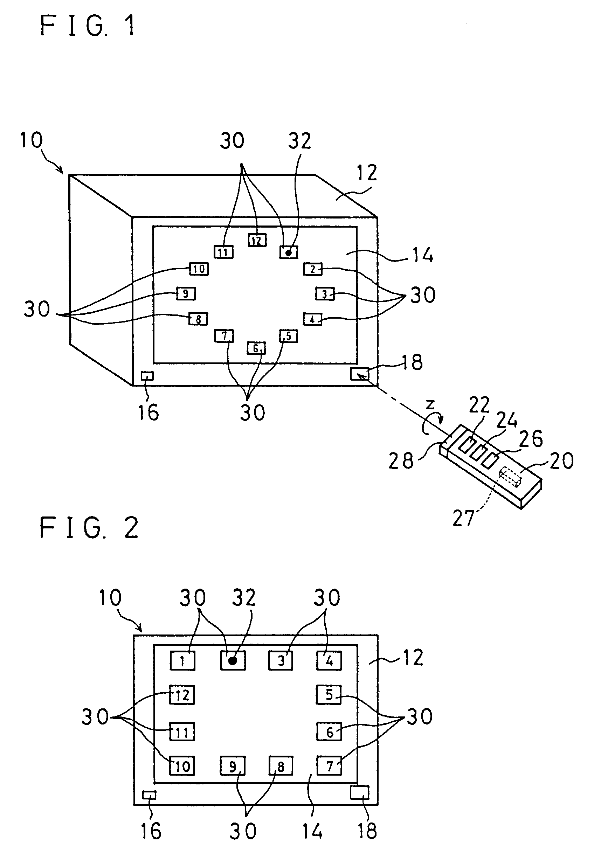

A remote control system of the present invention is described with reference to a television shown in Fig. 1 as an example. The television 10 includes a frame 12 in which a display 14 is mounted. A power switch 16 is provided on the television 10, and an electric power is supplied by turning ON the switch 16. The television 10 includes a receiver 18 which receives a control signal from a transmitter to be described later. By the control signal from the transmitter, respective functions of the television 10 are selected.

The transmitter 20 is used for controlling the television 10. A main switch 22, a menu switch 24, an execution switch 26 and so on are mounted on the transmitter 20. From the transmitter 20, the control signal by infrared rays is transmitted. The transmitter 20 is formed into, for example, a rectangular parallelepiped shape, and provided with an angular velocity sensor 27 for detecting an angular velocity z about its longitudinal axis. As the angular velocity sensors, such as a vibration gyroscope utilizing vibration of a vibrating body, a gas-rate sensor, an optical fiber, a rotating gyroscope and so on can be used. The control signal is transmitted from a transmitting portion 28 at one longitudinal end of the transmitter 20.

In the case of using the transmitter 20, by pressing the main switch 22 as keeping the power switch 16 in an ON state, the television 10 is turned on. For changing volumes and channels and displaying an input signal from the other equipment such as a VTR on the display, the menu switch 24 is pressed. Thereby, a plurality of selective items 30 are displayed on the display. The selective items 30 are displayed in a circular ring shape, and a cursor 32 is overlapped on one of the selective items 30. When the cursor 32 is adjusted to the desired selective item 30 and the execution switch 26 of the transmitter 20 is pressed, the selected function is executed.

For selecting the selective items 30, the transmitting portion 28 of the transmitter 20 is directed toward the receiver 18 and rotated about a longitudinal axis of the transmitter 20. Thereby, the angular velocity is given to the transmitter 20 and is detected by the angular velocity sensor 27. In the angular velocity sensor 27, a direction of rotation and a value of angular velocity are detected, and a corresponding signal is modulated into a pulse signal. The resulting pulse signal is transmitted from the transmitting portion 28 of the transmitter 20 as the control signal.

In this embodiment, by changing the rotating direction of the transmitter 20, a moving direction of the cursor 32 on the display 14 can be changed. That is, when the transmitter 20 is rotated clockwise, the cursor 32 is also moved clockwise on the selective items 30 arranged circularly. When the transmitter 20 is rotated counter clockwise, the cursor 32 is also moved counter clockwise on the selective items 30. When the cursor 32 is adjusted on the desired selective item 30, the cursor 32 is brought to a standstill by stopping the rotation of the transmitter 20. Meanwhile, the selected function is executed by pressing the execution switch 26 in that state.

By adopting this remote control system, when selecting the selective items 30, the transmitter 20 is not necessary to be moved laterally or vertically, and there is a little change that the control signal deviates from the receiving range of the receiver 18. Since a hand is mainly unstable vertically and laterally but is stable in the rotating direction, the movement of the cursor 32 due to the unstable hand is lessened and malfunctions can be prevented. Since the operating buttons for selecting the selective items 30 are few and can be selected by the rotating operation, as compared with a button-type transmitter or a 3-dimensional mouse moving vertically and laterally, a good operability is obtained. Since the angular velocity about one axis is to be detected, one angular velocity sensor is sufficient, thus the transmitter 20 can be miniaturized as compared with the 3-dimensional mouse. Furthermore, since only one angular velocity sensor is used, as compared with the conventional 3-dimensional mouse and the like, an electric power consumption is saved and can be utilized at low cost.

Though the selective items 30 are arranged circularly in the embodiment shown in Fig. 1, they may be arranged in a square along the display 14 as shown in Fig. 2, any arrangements of the selective items 30 are possible. As such, when the selective items 30 are arranged in a ring shape, the rotation of the transmitter 20 corresponds with the movement of the cursor 32, results in an easy operation. However, the selective items 30 may also be arranged in a matrix as shown in Fig. 3. It is also possible to adopt a moving method, whereby the transmitter 20 is rotated to move the cursor 32, for example, rightward on the selective items 30, and when reaching the right end, shifting to the selective items 30 arranged in the next row. That is, as far as the method is capable of detecting the angular velocity of the transmitter 20 to obtain the corresponding signal as the control signal, any arrangements of the selective items 30 are possible. The operating buttons can also be decreased to one by combining the functions.

Though the operation of the television is described in the above-mentioned embodiment, this remote control system can be used for controlling all sorts of equipments. For example, by combining a computer on the receiving side and selecting the selective items displayed on the display, it is possible to select programs inputted to the computer. When it is so designed that the signal is sent from the computer to control the other equipment, it is applicable for controlling all sorts of industrial machines. It is not always necessary to use the display for displaying the selective items, for example, LED and the like may also be used for displaying. In such case, the selective item is selected by rotating the transmitter, and the LED which is lit in response thereto may be moved successively. As such, any methods may be used for displaying the selective items.

While the present invention has been particularly described and shown, it is to be understood that such description is used merely as an illustration and example rather than limitation, and the spirit and scope of the present invention is determined solely by the terms of the appended claims.

## Claims

1. A remote control system comprising, a transmitter for transmitting a control signal to control an object being controlled, and a receiver for receiving said control signal from said transmitter, wherein said transmitter is provided with an angular velocity sensor, and an angular velocity about one axis is detected by said angular velocity sensor, and a signal corresponding to the detected angular velocity is transmitted as said control signal.

2. A remote control system in accordance with claim 1, wherein said receiver includes a display for displaying a plurality of selective items.

3. A remote control system in accordance with claim 2, wherein a cursor for selecting said selective items is displayed on said display.

4. A remote control system in accordance with claim 2, wherein said plurality of selective items are displayed on said display in a ring shape.

5. A remote control system in accordance with claim 3, wherein said plurality of selective items are displayed on said display in a ring shape.

6. A remote control system in accordance with claim 2, wherein said plurality of selective items are displayed on said display in a matrix.

7. A remote control system in accordance with claim 3, wherein said plurality of selective items are displayed on said display in a matrix.
